(19) Europäisches Patentamt
European Patent Office
Office européen des brevets

(11) **EP 1 079 098 B1**

(12) **EUROPÄISCHE PATENTSCHRIFT**

(45) Veröffentlichungstag und Bekanntmachung des Hinweises auf die Patenterteilung:
**26.05.2004   Patentblatt 2004/22**

(51) Int Cl.⁷: **F02M 51/06**, F16K 31/00, F02M 61/08, F02M 61/16, F02M 59/46

(21) Anmeldenummer: **00117809.4**

(22) Anmeldetag: **18.08.2000**

(54) **Dosiervorrichtung**

Metering valve

Soupape de dosage

(84) Benannte Vertragsstaaten:
**DE ES FR GB IT**

(30) Priorität: **24.08.1999   DE 19940055**

(43) Veröffentlichungstag der Anmeldung:
**28.02.2001   Patentblatt 2001/09**

(73) Patentinhaber: **SIEMENS AKTIENGESELLSCHAFT**
**80333 München (DE)**

(72) Erfinder:
• **Mock, Randolf Dr.**
  **81739 München (DE)**

• **Kappel, Andreas, Dr.**
  **85649 Brunnthal (DE)**
• **Gottlieb, Bernhard, Dr.**
  **81739 München (DE)**
• **Meixner, Hans, Prof. Dr.**
  **85540 Haar (DE)**
• **Fischer, Bernhard**
  **84513 Töging (DE)**

(56) Entgegenhaltungen:
**DE-A- 4 306 072       DE-A- 19 646 847**
**DE-A- 19 727 992      US-A- 4 550 744**

**Beschreibung**

Die Erfindung betrifft eine Dosiervorrichtung mit einem elektromechanischen Aktor, der eine Ventilnadel antreibt.

Bei einer Dosiervorrichtung mit einem elektromechanischem Aktor als Antriebselement muß darauf geachtet werden, daß

- der Aktor gegenüber dem zu dosierenden Fluid - im folgenden Dosierfluid genannt - geschützt ist,
- eine Zugspannung am Aktor vermieden wird,
- vorhandene Dichtelemente eine hohe mechanische Nachgiebigkeit in Bewegungsrichtung aufweisen, so daß eine Längenkompensation zum Ausgleich thermischer und druckbedingter Längenänderungen und zum Ausgleich herstellungsbedingter Längenstreuungen nicht behindert wird,
- eine hinreichende Druckfestigkeit der Dichtelemente gegeben ist,
- eine geeignete Kompensation druckbedingter Kräfte und/oder thermischer und/oder durch Alterungs- und Setzeffekte bedingter Kräfte bzw. Längenänderungen, zum Beispiel auf eine Ventilnadel, gegeben ist,
- eine hohe Zuverlässigkeit der Dichtelemente hinsichtlich einer Leckage garantiert ist,
- eine hydraulische Längenkompensation im typischen Temperaturintervall von -40° bis +150° Celsius gewährleistet ist.

Beispielsweise wirkt aufgrund einer druckbelasteten Fläche eines Ventiltellers eines nach außen öffnenden Dosierventils bei einem hohen Druck des Dosierfluids eine hohe in Öffnungsrichtung wirkende Druckkraft, welche zu einer Leckage des Dosierfluids nach außen führt.

Aus DE 43 06 072 C2 ist eine nach außen öffnende Dosiervorrichtung bekannt, bei der ein Piezoaktor eine Ventilnadel über eine Hydraulikkammer hubübersetzt antreibt. Der Piezoaktor ist in einer separaten Kammer untergebracht und durch O-Ringe gegenüber der Hydraulikflüssigkeit abgedichtet. Der Piezoaktor wird mittels einer Tellerfeder unter einer Druckvorspannung gehalten und stützt sich dazu am Gehäuse ab.

Aus DE 43 06 073 C1 ist ein nach innen öffnendes Einspritzventil bekannt, bei dem der Aktor ebenfalls in einem separaten Raum untergebracht ist und gegenüber den verwendeten Flüssigkeiten durch Abdichtringe abgedichtet ist. Auch hier wird der Piezoaktor am Gehäuse abgestützt und mittels einer Tellerfeder druckvorgespannt. Eine Dehnung des Aktors wird über einen Kolben-in-Kolben-Antrieb mit Hubumkehr in einen Hub einer Ventilnadel umgesetzt.

Aus EP 0 218 895 B1 ist ein Zumeßventil zur Dosierung von Flüssigkeiten oder Gasen bekannt, bei dem sich ein Vielschicht-Piezoaktor innerhalb eines Kraftstoff befüllten Bohrungsabschnitts befindet, und eine Endfläche des Piezoaktors mit einer nach außen öffnenden Ventilnadel verbunden ist, während das andere Ende des Piezoaktors mit einem Dämpfungskolben verbunden ist, welcher einen Dämpfungsraum begrenzt. Der Dämpfungsraum ist über mindestens einen Drosselspalt mit einem Ausgleichsraum verbunden, wobei das vom Dämpfungsraum, Drosselspalt und Ausgleichsraum zur Verfügung gestellte Volumen flüssigkeitsgefüllt und hermetisch abgeschlossen ist.

Ein ist eine Aufgabe der vorliegenden Erfindung, eine Dosiervorrichtung mit einer hydraulischen Längenkompensation bereitzustellen, welche eine langsame Längenkompensation auf einfache Weise realisiert.

Es ist auch eine Aufgabe, eine Möglichkeit zur Dosierung mit einer hohen Präzision bereitzustellen.

Diese Aufgabe wird mittels einer Dosiervorrichtung gemäß Anspruch 1 gelöst. Vorteilhafte Ausgestaltungen sind den jeweiligen Unteransprüchen entnehmbar.

Mittels der Dosiervorrichtung soll eine unter Druck stehendes Dosierfluid dosiert abgebbar sein, z. B. ein Kraftstoff wie Benzin oder Diesel zur Kraftstoffeinspritzung. Die Dosiervorrichtung einen Ventilraum in einem Gehäuse auf, in den eine Ventilnadel aufnehmbar ist.

Die Ventilnadel stellt zusammen mit einer Wand des Gehäuses ein Ventil dar, z. B. ein nach außen öffnendes Tellerventil oder eine nach innen öffnende Einspritzöffnung. Das Ventil ist durch Federkräfte, die direkt oder indirekt auf die Ventilnadel wirken, verschließbar und über eine Elongation eines Piezoaktors und eine entsprechende Hubbewegung der Ventilnadel zu öffnen. Der Piezoaktor ist zur Vermeidung einer schädlichen Zugspannung druckvorgespannt.

Der Piezoaktor befindet sich in einem Aktorraum, wobei ein in Längsrichtung, die der hauptsächlichen Dehnungsrichtung entspricht, des Piezoaktors wirkender Hydraulikkolben den Piezoaktor zur der Ventilnadel abgewandten Seite abstützt. Der Hydraulikkolben bildet zusammen mit dem Gehäuse eine Hydraulikkammer, welche mit dem Aktorraum über eine Passung zwischen Hydraulikkolben und Gehäuse miteinander hydraulisch gedrosselt verbunden sind. Dabei beinhaltet die hydraulische Drosselung selbstverständlich, daß sie über die radiale Passungsbreite steuerbar ist.

Weiterhin ist ein axial flexibles Dichtelement vorhanden, welches den Aktorraum gegen den Ventilraum hermetisch abdichtet, so daß kein Flüssigkeitsaustausch zwischen Aktorraum und Ventilraum stattfinden kann. Die Wahl eines axial flexibles Dichtelementes ist nicht eingeschränkt und kann z. B. einen Metall-, Gummi- oder Plastik-Balg oder auch eine Membran umfassen.

Mit der Hydraulikkammer steht ein Ausgleichsraum in hydraulischer Verbindung. Der Ausgleichsraum muß nicht im Gehäuse angebracht sein, sondern kann beispielsweise auch als eine separate, mit Zuleitungen mit der Hydraulikkammer in Verbindung stehende Kammer ausgeführt sein.

Der Aktorraum, die Hydraulikkammer und der Ausgleichsraum sind mit einer unter Druck stehenden Hydraulikflüssigkeit gefüllt,so daß das System Hydraulikkammer - Ausgleichsraum - Aktorraum - Hydraulikflüssigkeit ein dynamisch steifes Lager für den Piezoaktor und ein Längenausgleichselement für zeitlich längere Vorgänge bildet. Selbstverständlich umfaßt dieses System auch zwischen den Räumen wirkende hydraulische Verbindungen.

Diese Dosiervorrichtung besitzt den Vorteil, daß sie keine Dichtungen aufweist, so daß sie sehr wartungsarm ist.

Weiterhin ergibt sich der Vorteil, daß ein Kräftegleichgewicht am Piezoaktor einfach herstellbar ist, und ein Kräftegleichgewicht an der Ventilnadel durch Wahl des Dichtelementes einstellbar ist, z. B. durch Wahl eines hydraulischen Durchmessers bei Verwendung eines Metallbalgs als Durchführung für die Ventilnadel.

Auch kann vorteilhafterweise ein dauerhafter Grunddruck in der Hydraulikkammer aufrechterhalten werden, wwodurch eine gleichbleibende und vom Kraftstoffdruck unabhängige Funktion der Dosiervorrichtung ermöglicht wird.

Durch den Grunddruck ergibt sich weiterhin der Vorteil, daß die Hydraulikkammer kurzfristig hohe Zug- und Druckkräfte aufnehmen kann, wodurch eine Schließen des Ventils sehr viel schneller (typischerweise fünfmal bis zehnmal schneller9 erfolgen kann.

Vorteilhaft ist ebenfalls die durch den Druck der Hydraulikflüssigkeit bedingte hydraulische Druckvorspannung des Piezoaktors, weil dadurch kein Verlust in einer Uaslenkung des Piezoaktors auftritt.

Auch kann der Piezoaktor bei direktem Kontakt mit der Hydraulikflüssigkeit vorteilhaft gekühlt werden.

Es ist vorteilhaft, wenn die Hydraulikkammer mit dem Ausgleichsraum direkt mittels einer Drosselbohrung, z. B. einer Mikrobohrung, verbunden ist, weil sich so eine weitgehende Unabhängigkeit von der Viskosität der Hydraulikflüssigkeit und damit von der Temperatur ergibt.

Es ist auch günstig, wenn die Hydraulikkammer mit dem Ausgleichsraum über die Passung zwischen Hydraulikkolben und Gehäuse und über eine den Aktorraum und den Ausgleichsraum verbindende Verbindungsleitung hydraulisch verbunden ist, was in der Herstellung einfacher ist als die Einbringung einer speziellen Drosselbohrung.

Die Hydraulikflüssigkeit ist günstigerweise ein Silikonöl, welches sehr gute dielektrische und inerte Eigenschaften aufweist. Unter Silikonölen werden vor allem polymere Dimethylsiloxane verstandene. Besonders vorteilhaft ist es, wenn das Silikonöl im Grundzustand blasenfrei eingefüllt wird.

Es wird, insbesondere in einem Kraftstoff-Einspritzventil, bevorzugt, wenn der Druck der Hydraulikflüssigkeit im Bereich von 1 bar bis 20 bar, insbesondere 10 bar bis 20 bar, liegt. Dabei ist is im besonderen Maße vorteilhaft, wenn der Druck der Hydraulikflüssigkeit durch die Federeigenschaften eines Balgs, insbesondere eines Metallbalgs, erbracht wird, der zur Abdichtung der Hydraulikkammer dient. Noch vorteilhafter ist es, wenn zur Aufbringung des Druckes zusätzlich ein Federelement vorhanden ist.

Die Ventilnadel ist günstigerweise mit einer Fußplatte des Piezoaktors verschweißt, so daß eine Spaltfederung minimiert wird und gleichzeitig der Piezoaktor vor ungünstigen Spannungsüberhöhungen geschützt ist.

Es ist vorteilhaft, wenn der Piezoaktor ein piezoelektrischer Mehrschichtaktor ist.

Es ist auch vorteilhaft, wenn der Piezoaktor mittels einer Rückstellfeder druckvorgespannt wird, z. B. einer im Aktorraum eingebrachten Feder, welche sich am Gehäuse und an der Fußplatte abstützt.

Zur einfachen Herstellung und verlustfreien Kraftübertragung ist es günstig, wenn der Piezoaktor in eine Rohrfeder, insbesondere eine Schlitz-Rohrfeder, eingebracht ist und von dieser druckvorgespannt wird.

Es ist zur verbesserten Druckvorspannung und zur Kapselung des Piezoaktors vorteilhaft, wenn der Piezoaktor in einen Balg, insbesondere einen Metallbalg, eingebracht ist und von diesem druckvorgespannt wird. Bei hermetischer Verschweißung teilt der Balg den Aktorraum in einen Aktor-Innenraum und einen dagegen hydraulisch abgedichteten Aktor-Außenraum. Der Aktor-Außenraum weist die Eigenschaften des Aktorraums in Beziehung auf Befüllung und hydraulische Verbindungen auf, während der der Aktor-Innenraum abgeschlossen ist. Dadurch ist es möglich, die statischen und dynamischen Eigenschaften der Dosiervorrichtung zu erhalten, und gleichzeitig den Piezoaktor zu schützen. Dieser Schutz kann unter anderem darüber geschehen, daß eine gegenüber dem Aktor chemisch inerte Atmosphäre im Aktor-Innenraum hergestellt wird und dadurch, daß nun durch einen Druckunterschied zwischen Aktor-Außenraum und Aktor-Innenraum eine zusätzliche Druckkraft auch den Piezoaktor ausgeübt wird.

Es ist dabei günstig, falls der Aktor-Innenraum, der den Piezoaktor umschließt, keine Hydraulikflüssigkeit aufweist, sondern bevorzugt eine inerte Flüssigkeit oder ein inertes Gas, hingegen der Aktor-Außenraum mit der Hydraulikflüssigkeit befüllt ist.

Zur einfachen Herstellung, Kapselung und Druckvorspannugn ist es besonders vorteilhaft, wenn der Aktor-Innenraum mit Luft oder Schweißgas unter Atmosphärendruck befüllt ist.

Zur Kraäfteeinstellung an der Ventilnadel ist es vorteilhaft, wenn das axial flexible Dichtelement, welches den Aktorraum gegen den Ventilraum trennt, ein Federbalg, insbesondere ein weiterer Metallbalg ist, der einerseits an der Ventinadel und andererseits am Gehäuse angelenkt ist. Dies wird z. B. dadurch verwirklicht, daß der Metallbalg als Durchführung der Ventilnadel vorgesehen ist. In diesem Fall ist es besonders vorteilhaft, daß der hydraulische Durchmesser d2 des Metallbalgs mit dem Durchmesser d1 der Öffnung des Tellerventils, der Dichtlinie, abstimmbar. Bei einer Abstimmung gemäß der Beziehung d1 = d2 wird günstigerweise keine zusätzliche Kraft auf die Ventilnadel ausgeübt. Es kann aber auch eine Wahl von d1 < d2 zur Herstellung einer zusätzlichen Schließkraft an der Ventilnadel günstig sein, z. B. bei einem höheren Druck des Dosierfluids.

| | |
|---|---|
| Figur 1a | zeigt ein Dosierventil mit einem Piezoaktor, einer Ventilnadel und einem Hydraulikdämpfungssystem, wobei die Hydraulikkammer mit dem Aktorraum im verbunden ist, |
| Figur 1b | zeigt einen der in Figur 1a beschriebenen Dosiervorrichtung entsprechenden Querschnitt innerhalb einer Ventilkammer, |
| die Figuren 2a und 2b | zeigen Prinzipskizzen zur Definition von in dieser Beschreibung verwendeten Größen, |
| Figur 3 | zeigt ein System entsprechend Figur 1, wobei im Gegensatz dazu die Ventilnadel und der Piezoaktor nicht fest miteinander verbunden sind, |
| Figur 4 | zeigt ein Dosierventil entsprechend Figur 1, wobei die Verbindung zwischen der Hydraulikkammer und Ausgleichsraum über eine Systemdichtspalt-Ausgleichsbohrung geschieht, |
| Figur 5 | zeigt ein System entsprechend Figur 1, wobei im Gegensatz dazu die Ventilnadel und der Piezoaktor nicht fest miteinander verbunden sind. |

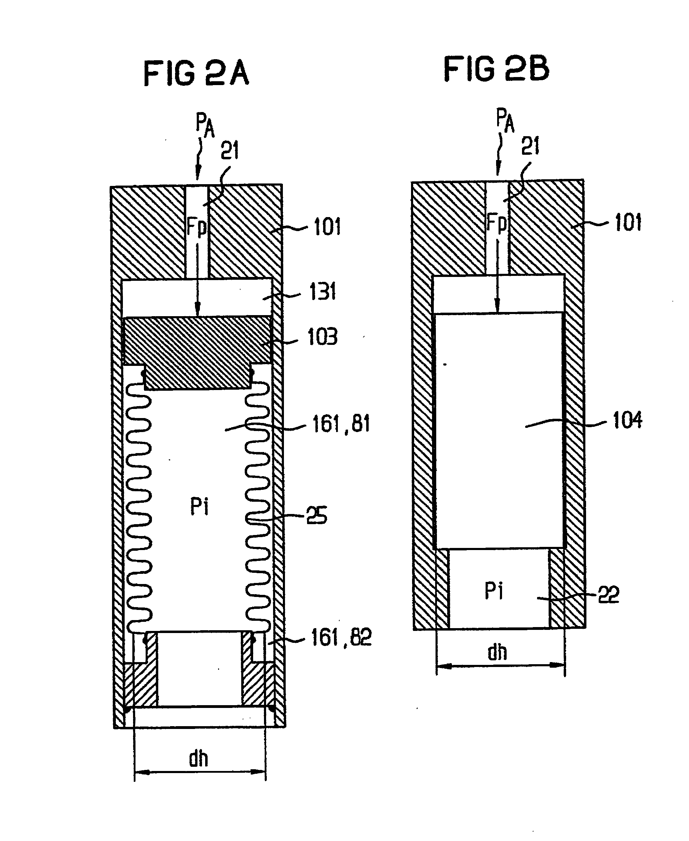

Figur 2a zeigt als Seitenansicht in Schnittdarstellung ein Gehäuse 101, welches einen in einer Bohrung axialverschiebbar angeordneten Hydraulikkolben 103 enthält. Durch den Hydraulikkolben 103 wird eine Bohrung des Gehäuses 101 in eine Hydraulikkammer 131 und eine Arbeitskammer 161 unterteilt. Im Arbeitsraum 161 ist der Hydraulikkolben 103 durch einen bezüglich der Längsachse der Bohrung rotationssymmetrischen Metallbalg 25 mit dem Gehäuse 101 verbunden. Durch den Metallbalg 25 wird die Arbeitskammer 161 wiederum in einen Aktor-Innenraum 81 und in einen Aktor-Außenraum 82 unterteilt.

Über eine Zuleitung 19 wird der Hydraulikraum 131 und dadurch durch eine Passung zwischen Hydraulikkolben 103 und Gehäuse 101 der Aktor-Außenraum 82 mit einem Druck pA beaufschlagt. In diesem Ausführungsbeispiel ist keine weitere Zuleitung zum Aktor-Außenraum 82 gegeben.

Der vom Aktor-Außenraum 82 abgetrennte Aktor-Innenraum 81 stehe unter einem Druck pI, wobei gelte pI ≠ pA. Dadurch wirkt auf den Metallbalg 25 die Druckkraft Fp, welche für den Fall pA > pI den Metallbalg 25 komprimiert. Die auf den Hydraulikkolben 103 ausgeübte Kraft Fp entspricht also der Vektoraddition der auf die Oberfläche des Hydraulikkolbens 103 wirkenden Kräfte.

In diesem Ausführungsbeispiel ist der Hydraulikkolben 103 gestuft mit einem größeren Durchmesser und einem kleineren Durchmesser ausgeführt, wobei der Metallbalg 25 einerseits an der Außenseite des Hydraulikolbens 103 am kleineren Durchmesser angebracht ist und andererseits bei gleichem Durchmesser an einer umlaufenden Nase des Gehäuses 1.

Der hydraulische Durchmesser dh bzw. der hydraulische Querschnitt Ah (auch wirksamer Balgquerschnitt genannt) ergibt sich aus der Kraft Fp nach der Formel

$$Fp = \pi \cdot dh^2 /4 \cdot (pA - pI) = Ah \cdot (pA - pI). \tag{1}$$

Dabei gilt unter der Bedingung pA > pI im allgemeinen dh > kleinerer Durchmesser des Hydraulikolbens 103. Dies liegt unter anderem daran, daß die Wellen der Metallbalgs 25 durch die Druckdifferenz in axialer Richtung zusammengedrückt werden.

Eine weitere Beschreibung des hydraulischen Querschnitts Ah wird in: Witzenmann GmbH: Metallbälge, 1997, Seiten 82 und 101, gegeben.

Selbstverständlich gelten die gleichen Zusammenhänge auch für andere Ausführungen von Bälgen, z. B. Plastikbälge.

In Figur 2b ist der in Bezug auf das Kräftegleichgewicht zu Figur 2a analoge Fall eines Hydraulikkolbens 104 gegeben, welcher aber nun auf der der Hydraulikkammer 103 abgewandten Seite nicht mit einem Metallbalg 25 verbunden ist, sondern auf einem zweiten Zulauf 22 aufliegt, wobei der zweite Zulauf 22 unter einem Druck pI steht. Der Hydraulikkolben 104 weist einen hydraulischen Durchmesser dh auf.

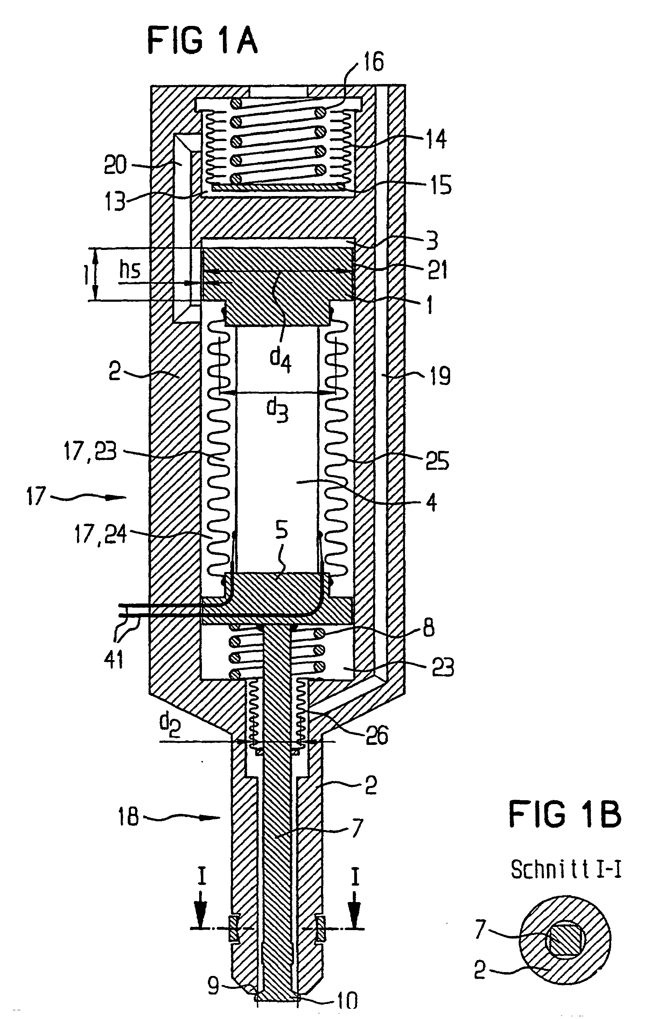

Figur 1a zeigt als Schnittdarstellung in Seitenansicht eine Dosiervorrichtung als Einspritzventil für Kraftstoff mit einem hydraulischen Längenausgleichselement.

Das Längenausgleichselement umfaßt einen Hydraulikkolben 1 einer Antriebseinheit, der zusammen mit dem Gehäuse 2 des Dosierventils eine Hydraulikkammer 3 bildet. Der Hydraulikkolben 1 weist einen Durchmesser d4 auf. Die Hydraulikkammer 3 ist über eine gedrosselte Verbindung in Form einer engen Passung 21 zwischen Hydraulikkolben 1 und Gehäuse 2 mit einem Aktorraum 17 verbunden.

Im Aktorraum 17 befindet sich ein piezoelektrischer Multilayeraktor (PMA) 4, vorzugsweise in Niedervolttechnik, als Teil der Antriebseinheit. Der PMA 4 ist über den Hydraulikkolben 1 und eine Fußplatte 5 innerhalb eines Metallbalgs 25 mit hydraulischem Durchmesser d3 hermetisch dicht eingeschweißt. Durch den Metallbalg 25 wird der Aktorraum 17 in einen Aktor-Innenraum 23, der den PMA 4 umfaßt und der nicht mit Hydraulikflüssigkeit gefüllt ist, und einen Aktor-Außenraum 24, der mit der Hydraulikflüssigkeit gefüllt ist, unterteilt. Der Aktor-Innenraum 23 ist bevorzugt unter Atmosphärendruck mit Luft gefüllt.

Die Verschweißung des Metallbalgs 25 ist günstig zur Abdichtung des Piezoaktors 4 gegenüber der Hydraulikflüssigkeit und zur Vermeidung eines Prellvorgangs zwischen der Antriebseinheit und einer Ventilnadel 7. Zudem wird durch den Metallbalg 25 der PMA 4 unter einer Druckvorspannung (typischerweise ca. 500 N) gehalten.

Die Fußplatte 5 kann wahlweise so gestaltet sein, daß sie gemeinsam mit dem Ventilgehäuse 2 als Führung für die Ventilnadel 7 dient. Dies erfordert eine Führung der Fußplatte 5 innerhalb des Aktorraums 17, wobei die Führung der Ventilnadel 7 an ihrem äußeren unteren Ende ausreicht. Diese Führung bewirkt eine Stabilisierung der Ventilnadel 7.

In den Ventilkörper ist ein Ventilsitz 9 eingearbeitet, der zusammen mit dem am unteren Ende der Ventilnadel 7 befindlichen Ventilteller 10 ein Tellerventil bildet. Der Durchmesser des Ventilsitzes 9 , der dem äußeren Durchmesser des Tellerventils entspricht, wird als Dichtlinie d1 bezeichnet.

Eine druckvorgespannte Rückstellfeder 8 hält das Tellerventil mit einer Rückstellkraft Fr im Ausgangszustand der Dosiervorrichtung, bei dem dieser kontrahiert ist, geschlossen. Die Rückstellfeder ist am Gehäuse 2 und an der Fußplatte 5 abgestützt.

Ein Teil der Ventilnadel 7 ist von einem Ventilraum 18 umgeben, der durch die Ventilnadel 7 und das Gehäuse 2 gebildet wird. Der Ventilraum 18 wird hier durch eine Bohrung gebil det, in der die Ventilnadel 7 weit geführt wird. Er ist mittels einer Fluid- bzw. Kraftstoffzuführung 19 druckbeaufschlagbar und mit dem Tellerventil hydraulisch verbunden, so daß bei geöffnetem Tellerventil, d. h. wenn der Ventilteller 10 vom Ventilsitz 9 abgehoben ist, ein Fluidstrom vom Ventilraum 18 zum Tellerventil fließt und das Dosierfluid über das Tellerventil nach außen abgegeben wird.

Der Ventilraum 18 ist gegenüber dem Aktorraum 17 durch eine in Verschiebungsrichtung der Ventilnadel 7 flexible Abdichtung, hier: ein weiterer Metallbalg 26 mit hydraulischem Durchmesser d2, hermetisch abgedichtet. Der weitere Metallbalg 26 wird durch dichtende Schweißnähte an seinem unteren Ende mit der Ventilnadel 7 und an seinem oberen Ende mit dem Gehäuse 2 verbunden, so daß seine Außenseite dem Druck des von der Fluid- bzw. Kraftstoffzuführung 19 angelieferten Dosierfluids ausgesetzt ist und seine Innenseite dem Niederdruck ph der Hydraulikflüssigkeit.

Der hydraulische Durchmesser d2 des Metallbalgs d2 ist mit der Dichtlinie d1 abstimmbar. Bei einer Abstimmung gemäß der Beziehung d1 = d2 wird keine zusätzliche Kraft auf die Ventilnadel 7 ausgeübt. Es kann aber auch eine Wahl von d1 < d2 zur Herstellung einer zusätzlichen Schließkraft an der Ventilnadel 7 günstig sein, z. B. bei einem höheren Druck des Dosierfluids.

Möglichst nahe am Ventilteller 10 ist auch die Führung der Fußplatte 5 plaziert, entsprechend dieser Figur derart ausgebildet ist, daß sie bei geöffnetem Tellerventil den Flüssigkeitsstrom nicht drosselt (siehe Schnitt I-I in Figur 1b).

Der Aktor-Außenraum 24 steht über eine Ausgleichsbohrung 20 mit einem Ausgleichsraum 13 in ungedrosselter fluidischer Verbindung. Dadurch werden Kompressionseffekte der im Aktor-Außenraum 24 befindlichen Hydraulikflüssigkeit vermieden, z. B. bei Verschiebung von im Aktorraum 17 befindlichen Elementen.

Der Ausgleichsraum 13 wird durch das Gehäuse 2 und eine flexible, hermetisch dichte Abdichtung nach außen hin gebildet. Die flexible Abdichtung wird in dieser Figur durch einen Metallbalg 14 dargestellt werden, der mit einer Abschlußscheibe 15 seinem an einem Ende und an seinem anderen Ende mit dem Gehäuse 2 verschweißt ist. Es kann aber beispielsweise auch eine Metall-, Gummi- oder Kunststoffmembrane (z. B. Blasenspeicher) zum Einsatz kommen, da es sich lediglich um flexible Niederdruckabdichtungen handelt. Das Ausgleichsvolumen des Ausgleichsraumes 13 könnte auch durch einen Kolben mit O-Ringdichtung abgeschlossen werden. Der Ausgleichsraum 13 dient dazu, eine Volumenänderung der Hydraulikflüssigkeit im Aktorraum 17 , z. B. aufgrund einer Längenkompensation oder einer thermische Volumenänderung, ohne einen signifikanten Druckanstieg auszugleichen.

Die Hydraulikkammer 3, die Ausgleichsbohrung 20, der Ausgleichsraum 13 und der Aktor-Außenraum 24 sind im Grundzustand des Dosierventils blasenfrei mit der Hydraulikflüssigkeit gefüllt. Die Hydraulikflüssigkeit wird beispielsweise durch eine weiche Druckfeder 16 unter einen geringen Vordruck ph von ca. 1 bar bis 20 bar, vorzugsweise 10 bar bis 20 bar, versetzt. Die Druckfeder 16 ist zwischen dem Gehäuse und der Abschlußscheibe 15 eingespannt. Wenn die Federwirkung der flexiblen Abdichtungen, hier: der Metallbälge 14,25,26, selbst ausreicht, um die Hydraulikflüssigkeit hinreichend unter Vorspannung zu setzen, kann auf eine zusätzliche Feder 16 verzichtet werden.

Mittels des Vordrucks ph wird eine schädliche Kavitation in der Hydraulikkammer 3 vermeiden. Zudem wird auf den Piezoaktor 4 eine hydraulische Druckkraft Fd = ph·$\pi$·d3$^2$/4 $\approx$ 15 N bis 300 N in axialer Richtung ausgeübt, mittels der eine Schädigung durch eine Zugspannung weiter verringerbar ist. Die hydraulische Druckkraft Fd wird additiv zur Federkraft Fd.

Weiterhin wird durch den Vordruck eine kleine Menge der Hydraulikflüssigkeit, die während der Öffnungsphase des Dosierventils aus der Hydraulikkammer 3 durch die Drosselblende in den Ausgleichsraum 13 gedrängt wird, während der Phase, in der das Einspritzventil geschlossen ist, wieder zurück in die Hydraulikkammer 3 geführt. Dabei wird die Antriebseinheit wieder in die Ausgangsposition gebracht.

Zur Wirkungsweise, insbesondere der Hydraulikkammer 3 des hydraulischen Längenausgleichselements, ist folgendes zu sagen: Das Längenausgleichselement soll innerhalb einer typischen Einspritzzeit von beispielsweise 1 bis 5 ms als steifes Lager wirken. Die Kraft der Rückstellfeder 8 von ca. 50 bis 150 N und zusätzlich die auftretenden Beschleunigungskräfte, die während des Öffnens und des Schließens des Ventils innerhalb der Schaltzeit wirken, soll das Längenausgleichselement ohne nennenswerten Einfluß auf die Höhe der Hydraulikkammer 3 aufnehmen. Die Schaltzeiten liegen typischerweise im Bereich von 100 bis 200 $\mu$ms, die Einspritzzeiten zwischen 1 ms und 5 ms.

Thermische Längenänderungen hingegen, die in Zeitspannen von etlichen Sekunden bis Minuten stattfinden, soll das Ausgleichselement durch Austausch von Hydraulikflüssigkeit mit dem Ausgleichsraum 13 abfangen.

In dieser Figur wird durch die enge Passung 21 die oben beschriebene gewünschte Charakteristik des hydraulischen Lagers erzielt. Dazu ist es nötig, die Passung 21 derart auszulegen, daß binnen typischer Einspritzzeiten praktisch kein Austausch der Hydraulikflüssigkeit stattfinden kann. Andererseits soll der Flüssigkeitsaustausch aber binnen typischer Zeiten für thermische Längenänderungen ungehindert stattfinden.

Die Hydraulikkammer 3 besitzt aufgrund der Kompressibilität der Hydraulikflüssigkeit eine Steifigkeit, die um so höherer ist, je geringer die Höhe der Hydraulikkammer 3 ausgelegt ist. Daher sollte die Hydraulikkammer 3 nicht höher als zum Ausgleich von Fertigungstoleranzen und thermischen Längenänderungen unbedingt nötig ausgelegt werden.

Auch sollte das Ausgleichsvolumen so gering wie möglich gehalten werden, damit die zusätzlichen thermische Volumenänderung der Hydraulikflüssigkeit über den typischen Temperaturbereich von -40° bis +150° Celsius möglichst gering gehalten wird und vom flexiblen Dichtelement, dem Metallbalg 14, ohne nennenswerte Druckänderung in der Hydraulikflüssigkeit abgefangen wird.

Bei einem Einspritzvorgang wird der PMA 4 über seine elektrischen Anschlüsse 41 elongiert. Aufgrund der kurzen Zeitdauer des Einspritzvorgangs (typischerweise 1 ms $\leq$ 5 ms mit einer Dauer des Stellvorgangs zwischen 100 $\mu$m und 200 $\mu$m) verhält sich die Hydraulikkammer 3 in sehr guter Näherung steif, so daß der PMA 4 daran abgestützt wird. Die Dehnung des PMA 4 (typischerweise zwischen 30 $\mu$m und 60 $\mu$m) wird also fast vollständig in einen Hub der Ventilnadel 7 umgewandelt. Die Ventilnadel 7, und damit der Ventilteller 10, wird vom Dichtsitz 9 abgehoben, wodurch das Tellerventil geöffnet wird. Vom Ventilraum 18 fließt Dosierfluid durch die weite Passung zwischen Ventilnadel 7 und Gehäuse 2 zum Tellerventil und wird von dort nach außen abgegeben. Über die Zuleitung 19 wird der Ventilraum 18 mit Dosierfluid nachgefüllt.

Zum Abschluß eines Einspritzvorganges, wenn der PMA über seine elektrischen Anschlüsse 41 entladen und somit kontrahiert. Dadurch wird der Ventilteller 10 auf den Dichtsitz 9 aufgesetzt, und Tellerventil wird geschlossen. Die Rückstellung der Ventilnadel 7 geschieht dabei vor allem durch ein hydraulische Druckvorspannung des PMA sowie den Druck von Rückstellfeder 8 und die Metallbalg 25.

Die Hydraulikkammer 3 ist aufgrund ihrer hohen Steifigkeit und insbesondere des Drucks der Hydraulikflüssigkeit kurzfristig in der Lage, auch hohe Zugkräfte aufzunehmen.

Zur Auslegung der Hydraulikkammer 3 dienen folgende Abhängigkeiten:

der typische Durchmesser d4 des Hydraulikkolbens 1 und der Hydraulikkammer 3 beträgt: d4 = 18 mm, woraus eine zugehörige Kolbenfläche Ak = 254 mm$^2$ folgt. Die typische Kammerhöhe hk beträgt 500 $\mu$m, und eine typische Kompressibilität $\chi$ der Hydraulikflüssigkeit beträgt $\chi$ = 1·10$^{-9}$ m$^2$/N. Die minimale Steifigkeit (Federkonstante) $c_k$ der Hydraulikkammer 3 errechnet sich daraus zu:

$$c_k = A_k/(\chi \cdot hk) \approx 500 \text{ N/}\mu\text{m.} \tag{1}$$

Es folgt für die den Hubverlust $\Delta$x1 aufgrund der Steifigkeit der Hydraulikkammer 3 bei einer mittleren von der Hydraulikkammer 3 während des Einspritzvorganges zu tragenden Kraftdifferenz $\Delta$F = 200N, daß $\Delta$x1 = $\Delta$F / ck = 0,4 $\mu$m.

Der Hubverlust $\Delta$x2 aufgrund des Flüssigkeitsstroms $Q_L$ durch die Passung 21 während der Zeit t eines Einspritzvorgangs errechnet sich aus $\Delta$x2 = $\Delta$V/Ak, mit $\Delta$V dem Volumenverlust. Es gilt, daß $\Delta$V = $Q_L$·t für ein typisches Silikonöl (z. B. Baysilone M 50), mit

$$Q_L = 2{,}5 \cdot \pi \cdot d4 \cdot h^3 \cdot \Delta P / (12 \cdot \eta \cdot l),$$

mit radialer Passungsbreite hs = 2 μm, Druckdifferenz $\Delta P = \Delta F/Ak < 8$ bar, kinematische Viskosität ν (bei T = 140 °C) = 10 mm$^2$/s und Dichte ρ (bei T = 140 °C) = 0,87 g/cm$^3$ und daraus dynamische Viskosität η (bei 140 °C) = ν·ρ = 8,7 mPa·s und Länge 1 der Passung in axialer Richtung = 10 mm. Es folgt, daß der Hubverlust $\Delta x2$ der Dosiervorrichtung durch Volumenverlust der Hydraulikkammer 3 kleiner als 0,02 m beträgt.

Der gesamte Hubverlust $\Delta x = \Delta x1 + \Delta x2 < 0{,}5$ μm ist somit für den Betrieb der in dieser Figur dargestellten Dosiervorrichtung ausreichend klein.

In Figur 1b ist ein Querschnitt entlang einer in Figur 1a eingezeichneten Ebene I dargestellt.

Man erkennt einen ringförmigen Querschnitt des Gehäuses 2, in dem eine Ventilnadel 7 mit quadratischem und an den Ecken abgerundeten Querschnitt eingebracht ist. Mittels dieser Anordnung ist es möglich, die Ventilnadel 7 mit guter Genauigkeit zu führen und gleichzeitig einen großen Volumenstrom von Dosierfluid an der Ventilnadel 7 zu garantieren.

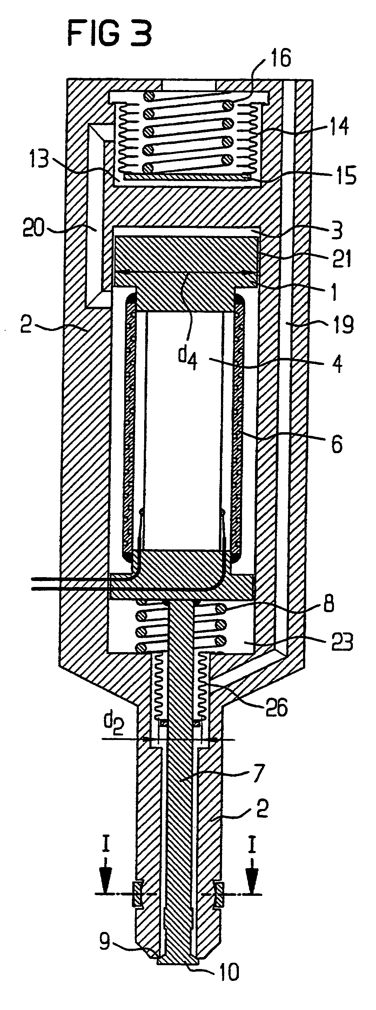

Figur 3 zeigt eine zur Dosiervorrichtung in Figur 1a analoge Dosiervorrichtung, bei der der Metallbalg 25 nun durch eine Rohrfeder 6 ersetzt ist. Dabei steht der PMA 4 in direktem Kontakt mit der Hydraulikflüssigkeit. Als Hydraulikflüssigkeit wird vorzugweise eine chemisch reaktionträges Flüssigkeit verwendet wie z. B. die aufgrund ihrer dielektrischen und inerten Eigenschaften hervorragend geeigneten Silikonöle (=polymere Dimethylsiloxane).

Die Rohrfeder 6 besitzt gegenüber dem Metallbalg 25 den Vorteil, daß sie vergleichsweise preiswert ist. insbesondere eine Schlitzrohrfeder läßt sich einfach in hohen Stückzahlen herstellen.

Durch den direkten Kontakt des PMA 4 mit der Hydraulikflüssigkeit ergibt sich günstigerweise eine sehr gute Abführung der am PMA 4 erzeugten Joule'schen Verlustwärme an die Umgebung. Zudem ist der PMA 4 hervorragend gegen Umwelteinflüsse geschützt.

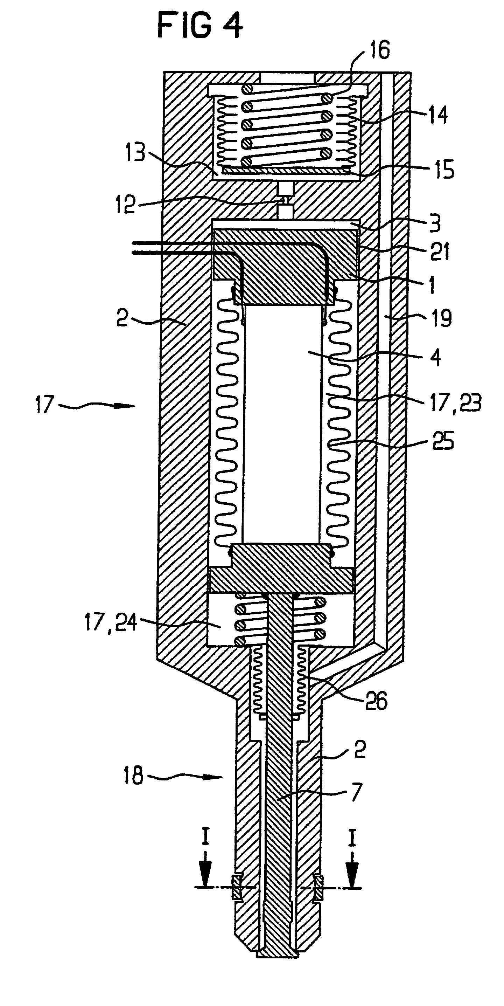

Figur 4 zeigt als Schnittdarstellung in Seitenansicht eine Dosiervorrichtung, bei der im Gegensatz zur Dosiervorrichtung in Figur 1a der Ausgleichsraum 13 mit dem Hydraulikraum 3 ausschließlich über eine Drosselbohrung 12 zusammenhängt.

Bei Einsatz einer Drosselbohrung 12 wird die Drosselwirkung überwiegend durch Turbulenzen erzeugt. Somit ist diese Funktion weitgehend unabhängig von der Viskosität der Hydraulikflüssigkeit und damit von der Temperatur.

Die Viskosität von Hydraulikfluiden sinkt im kraftfahrzeugtechnisch relevanten Temperaturbereich von -40° bis + 150° Celsius typischerweise um den Faktor von 20 bis 50 bei Silikonölen und um einen Faktor von bis zu 100.000 bei Mineralölen.

Im Gegensatz dazu dient in der Patentschrift EP 0 218 895 B1 und in Figur 3 der Ringspalt bzw. Dichtspalt des Hydraulikkolbens als Drosselelement. Die Drosselwirkung eines derartigen Ringspaltes ist direkt proportional zur Viskosität und daher in hohem Maße temperaturabhängig.

Die Drosselbohrung 12 ist bevorzugt als Mikrobohrung mit einem für den kraftfahrzeugtechnischen Einsatzfall typischen Durchmesser zwischen 10 μm und 50 μm. ausgeführt. Eine derartige Mikrobohrung kann beispielsweise mit Hilfe der Lasertechnik oder durch galvanisches Abscheiden von Nickel innerhalb bereits bestehender Bohrungen genau und reproduzierbar hergestellt werden.

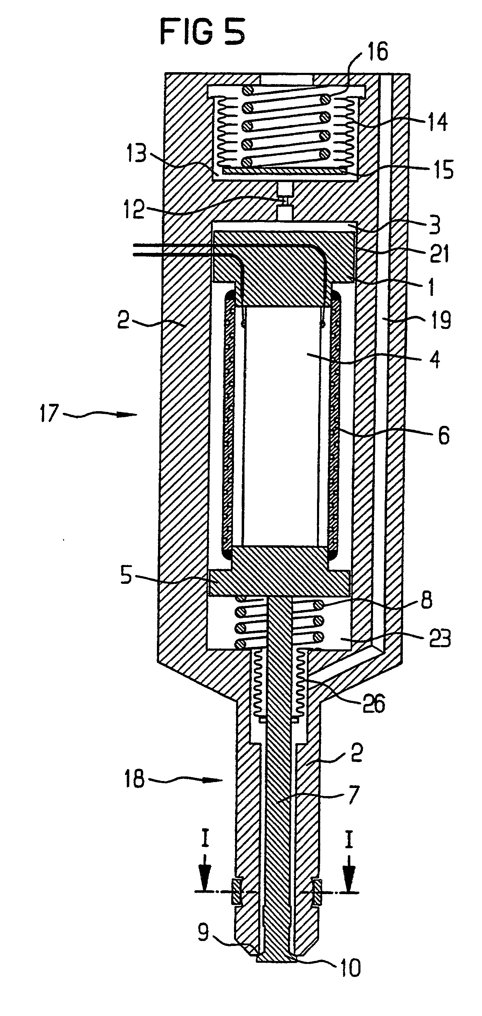

Figur 5 zeigt als Schnittdarstellung in Seitenansicht eine Dosiervorrichtung, bei der im Gegensatz zur Dosiervorrichtung in Figur 3 der Ausgleichsraum 13 mit dem Hydraulikraum 3 ausschließlich über eine gedrosselte Bohrung 12 zusammenhängt.

Bei allen Ausführungsformen kann selbstverständlich der Ausgleichsraum 13 auch außerhalb des Gehäuses 2 als separate, z. B. mittels fester Leitungen verbundener, Kammer ausgeführt sein. Auch kann statt eines Piezoaktors 4 ein anderer elektromechanischer Aktor, z. B. ein elektro- oder magnetostriktiver Aktor, verwendet werden.


**Patentansprüche**

1.  Dosierventil zur Dosierung eines unter Druck stehenden Dosierfluids, aufweisend:

    -  einem Ventilraum (18) in einem Gehäuse (2) zur Aufnahme einer Ventilnadel (7), die zusammen mit einer Wand des Gehäuses (2) ein Ventil darstellt, welches durch Federkräfte geschlossen und über eine Elongation eines druckvorgespannten Piezoaktors (4) und eine entsprechende Hubbewegung der Ventilnadel (7) zu öffnen ist,

    -  einem Aktorraum (17) zur Aufnahme des Piezoaktors (4), wobei ein in Längsrichtung des Piezoaktors (4) wirkender Hydraulikkolben (1) den Piezoaktor (4) zur der Ventilnadel (7) abgewandten Seite abstützt, der Hydraulikkolben (1) zusammen mit dem Gehäuse (2) eine Hydraulikkammer (3) bildet, und der Aktorraum (17) mit der Hydraulikkammer (3) über eine Passung (21) zwischen Hydraulikkolben (1) und Gehäuse (2) miteinander hydraulisch gedrosselt verbunden sind,

- einem axial flexiblen Dichtelement (26), welches den Aktorraum (17) gegen den Ventilraum (18) hermetisch abdichtet,
- einem mit der Hydraulikkammer (3) in Verbindung stehenden Ausgleichsraum (13),

**dadurch gekennzeichnet, daß** der Aktorraum (17), die Hydraulikkammer (3) und der Ausgleichsraum (13) mit einer unter Druck stehenden Hydraulikflüssigkeit gefüllt sind, derart, daß das System Hydraulikkammer (3)-Ausgleichsraum (13)- Aktorraum (17)- Hydraulikflüssigkeit ein dynamisch steifes Lager für den Piezoaktor (4) und ein Längenausgleichselement für zeitlich längere Vorgänge bildet.

2. Dosierventil nach Anspruch 1, wobei die Hydraulikkammer (3) mit dem Ausgleichsraum (13) direkt mittels einer Drosselbohrung (12) verbunden ist.

3. Dosierventil nach Anspruch 1, wobei die Hydraulikkammer (3) mit dem Ausgleichsraum (13) über die Passung (21) zwischen Hydraulikkolben (1) und Gehäuse (2) und über eine den Aktorraum (17) und den Ausgleichsraum (13) verbindende Verbindungsleitung (20) hydraulisch verbunden ist.

4. Dosierventil nach einem der vorhergehenden Ansprüche, wobei die Hydraulikflüssigkeit ein im Grundzustand blasenfreies Silikonöl ist.

5. Dosierventil nach einem der vorhergehenden Ansprüche, wobei der Druck der Hydraulikflüssigkeit im Bereich von 1 bar bis 20 bar, insbesondere 10 bar bis 20 bar, liegt.

6. Dosierventil nach einem der vorhergehenden Ansprüche, wobei der Druck der Hydraulikflüssigkeit durch die Federeigenschaften eines Metallbalges (14) erbracht wird, der zur Abdichtung der Hydraulikkammer (13) dient.

7. Dosierventil nach einem der vorhergehenden Ansprüche, wobei zur Aufbringung des Druckes zusätzlich eine Feder (16) vorhanden ist.

8. Dosierventil nach einem der vorhergehenden Ansprüche, wobei die Ventilnadel (7) mit einer Fußplatte (5) des Piezoaktors (4) verschweißt ist.

9. Dosierventil nach einem der vorhergehenden Ansprüche, wobei der Piezoaktor (4) ein piezoelektrischer Mehrschichtaktor ist.

10. Dosierventil nach einem der vorhergehenden Ansprüche, bei dem der Piezoaktor (4) mittels einer Rückstellfeder (8) druckvorgespannt wird.

11. Dosierventil nach einem der vorhergehenden Ansprüche, bei dem der Piezoaktor (4) in eine Rohrfeder (6) eingebracht ist und von dieser druckvorgespannt wird.

12. Dosierventil nach einem der Ansprüche 1 bis 10, bei dem

- der Piezoaktor (4) in einen Metallbalg (25) eingebracht ist und von diesem druckvorgespannt wird, und
- der Metallbalg (25) den Aktorraum (17) in einen Aktor-Innenraum (23) und einen dagegen hydraulisch abgedichteten und Aktor-Außenraum (24) unterteilt,

wobei

- der Aktor-Innenraum (23) keine Hydraulikflüssigkeit aufweist und den Piezoaktor (4) umschließt, und
- der Aktor-Außenraum (24) mit der Hydraulikflüssigkeit befüllt ist.

13. Dosierventil nach Anspruch 12, bei dem der Aktor-Innenraum (23) mit Luft unter Atmosphärendruck befüllt ist.

14. Dosierventil nach einem der vorhergehenden Ansprüche, bei dem das axial flexible Dichtelement ein Federbalg, insbesondere ein weiterer Metallbalg (26) ist, der einerseits an der Ventinadel (7) und andererseits am Gehäuse (2) angelenkt ist.

**15.** Dosierventil nach Anspruch 14, bei dem ein hydraulischer Durchmesser d2 des Federbalgs einem Durchmesser d1 einer Dichtlinie des Tellerventils entspricht.

**Claims**

**1.** Metering valve for metering a metered fluid under pressure, having:

- inside a housing (2) a valve chamber (18) to receive a valve needle (7), which together with a wall of the housing (2) constitutes a valve that is closed by spring forces and is opened via an elongation of a piezo-actuator (4) under a bias pressure and a corresponding travel of the valve needle (7),
- an actuator chamber (17) to take the piezo-actuator (4),

wherein a hydraulic piston (1) acting in the longitudinal direction of the piezo-actuator (4) supports the piezo-actuator (4) at the end opposite to the valve needle (7), the hydraulic piston (1) together with the housing (2) forms a hydraulic chamber (3), and the actuator chamber (17) is hydraulically connected to the hydraulic chamber (3) via a clearance (21) between hydraulic piston (1) and housing (2) that provides hydraulic throttling,

- an axially flexible sealing element (26) that hermetically seals the actuator chamber (17) from the valve chamber (18),
- an equalising chamber (13) that is connected to the hydraulic chamber (3),

**characterized in that** the actuator chamber (17), the hydraulic chamber (3) and the equalising chamber (13) are filled with a hydraulic fluid under pressure so that the system comprising hydraulic chamber (3)- equalising chamber (13) - actuator chamber (17)- hydraulic fluid forms a dynamically stiff bearing for the piezo-actuator (4), and a length compensation element for processes of longer duration.

**2.** Metering valve according to Claim 1, wherein the hydraulic chamber (3) is connected directly to the equalising chamber (13) by means of a throttling bore (12).

**3.** Metering valve according to Claim 1, wherein the hydraulic chamber (3) is hydraulically connected to the equalising chamber (13) via the clearance (21) between hydraulic piston (1) and housing (2) and via a connecting duct (20) connecting the actuator chamber (17) to the equalising chamber (13).

**4.** Metering valve according to one of the preceding claims, wherein the hydraulic fluid is a silicone oil with no pockets of air in the home position.

**5.** Metering valve according to one of the preceding claims, wherein the pressure of the hydraulic fluid lies in the range 1 bar to 20 bar, in particular 10 bar to 20 bar.

**6.** Metering valve according to one of the preceding claims, wherein the pressure of the hydraulic fluid is applied by the spring properties of a metal bellows (14) that is used to seal the hydraulic chamber (13)

**7.** Metering valve according to one of the preceding claims, wherein a spring (16) is also present to apply the pressure.

**8.** Metering valve according to one of the preceding claims, wherein the valve needle (7) is welded to a base plate (5) of the piezo-actuator (4).

**9.** Metering valve according to one of the preceding claims, wherein the piezo-actuator (4) is a piezoelectric multilayer actuator.

**10.** Metering valve according to one of the preceding claims, in which a bias pressure is applied to the piezo-actuator (4) by means of a return spring (8).

**11.** Metering valve according to one of the preceding claims, in which the piezo-actuator (4) is placed in a tube spring (6) which applies a bias pressure to it

**12.** Metering valve according to one of the claims 1 to 10, in which

- the piezo-actuator (4) is placed in a metal bellows (25) which applies a bias pressure to it, and
- the metal bellows (25) divides the actuator chamber (17) into an actuator inner chamber (23) and an actuator outer chamber (24) that is hydraulically sealed from this,

wherein

- the actuator inner chamber (23) contains no hydraulic fluid and encloses the piezo-actuator (4), and the actuator outer chamber (24) is filled with the hydraulic fluid.

**13.** Metering valve according to Claim 12, in which the actuator inner chamber (23) is filled with air under atmospheric pressure.

**14.** Metering valve according to one of the preceding claims, in which the axially flexible sealing element is a spring bellows, in particular an additional metal bellows (26), attached to the valve needle (7) at one end and to the housing (2) at the other end.

**15.** Metering valve according to Claim 14, in which a hydraulic diameter d2 of the spring bellows equals a diameter d1 of a sealing line of the disc valve.

**Revendications**

**1.** Soupape de dosage permettant de doser un fluide à doser sous pression, laquelle présente :

- une chambre de soupape (18) située dans un carter (2) permettant de loger une aiguille de soupape (7), laquelle forme, ensemble avec une paroi du carter (2), une soupape qui est fermée par des forces de ressort et peut être ouverte par une élongation d'un actionneur piézoélectrique (4) sous tension de compression et par un mouvement de levée correspondant de l'aiguille de soupape (7),
- une chambre d'actionnement (17) permettant de loger l'actionneur piézoélectrique (4), un piston hydraulique (1) agissant dans le sens longitudinal de l'actionneur piézoélectrique (4) servant de support à l'actionneur piézoélectrique (4) du côté opposé à l'aiguille de soupape (7), le piston hydraulique (1) formant ensemble avec le carter (2) une chambre hydraulique (3), et la chambre d'actionnement (17) étant reliée à la chambre hydraulique (3) par un ajustement (21) ménagé entre le piston hydraulique (1) et le carter (2) de manière à former un étranglement hydraulique,
- un élément d'étanchéité (26) axialement flexible lequel rend la chambre d'actionnement (17) hermétiquement étanche par rapport à la chambre de soupape (18),
- un espace de compensation (13) relié à la chambre hydraulique (3),

**caractérisée en ce que** la chambre d'actionnement (17), la chambre hydraulique (3) et l'espace de compensation (13) sont remplis d'un liquide hydraulique sous pression, de sorte que le système constitué par la chambre hydraulique (3), l'espace de compensation (13), la chambre d'actionnement (17) et le liquide hydraulique forme un palier rigide et dynamique pour l'actionneur piézoélectrique (4) ainsi qu'un élément de compensation de longueur pour des opérations s'étendant dans le temps.

**2.** Soupape de dosage selon la revendication 1, la chambre hydraulique (3) étant directement reliée à l'espace de compensation (13) au moyen d'un orifice d'étranglement (12).

**3.** Soupape de dosage selon la revendication 1, la chambre hydraulique (3) étant reliée de manière hydraulique à l'espace de compensation (13) par un ajustement (21) ménagé entre le piston hydraulique (1) et le carter (2) ainsi que par un conduit de raccordement (20) reliant la chambre d'actionnement (17) et l'espace de compensation (13).

**4.** Soupape de dosage selon l'une des revendications précédentes, le liquide hydraulique étant une huile de silicone qui, à son état normal, est exempt de bulles.

**5.** Soupape de dosage selon l'une des revendications précédentes, la pression du liquide hydraulique se situant entre I bar et 20 bars, en particulier entre 10 bars et 20 bars.

**6.** Soupape de dosage selon l'une des revendications précédentes, la pression du liquide hydraulique étant générée par les propriétés élastiques d'un soufflet métallique (14), lequel sert à rendre étanche la chambre hydraulique (3).

7.  Soupape de dosage selon l'une des revendications précédentes, la génération de la pression étant en outre assurée par un ressort (16).

8.  Soupape de dosage selon l'une des revendications précédentes, l'aiguille de soupape (7) étant soudée à une plaque d'assise (5) de l'actionneur piézoélectrique (4).

9.  Soupape de dosage selon l'une des revendications précédentes, l'actionneur piézoélectrique (4) étant un actionneur piézoélectrique multicouche.

10. Soupape de dosage selon l'une des revendications précédentes dans laquelle l'actionneur piézoélectrique (4) est mis sous tension de compression au moyen d'un ressort de rappel (8).

11. Soupape de dosage selon l'une des revendications précédentes dans laquelle l'actionneur piézoélectrique (4) est logé dans un tuyau élastique (6) et est mis par celui-ci sous tension de compression.

12. Soupape de dosage selon l'une des revendications 1 à 10 dans laquelle

    -   l'actionneur piézoélectrique (4) est logé dans un soufflet métallique (25) et est mis par celui-ci sous tension de compression, et
    -   le soufflet métallique (25) subdivise la chambre d'actionnement (17) en une zone intérieure (23) et une zone extérieure (24), lesquelles sont séparées hydrauliquement l'une de l'autre de manière étanche,
    -   la zone intérieure (23) de l'actionneur ne présentant pas de liquide hydraulique et entourant l'actionneur piézoélectrique (4), et
    -   la zone extérieure (24) de l'actionneur étant remplie du liquide hydraulique.

13. Soupape de dosage selon la revendication 12 dans laquelle
    la zone intérieure (23) de l'actionneur est remplie d'air sous pression atmosphérique.

14. Soupape de dosage selon l'une des revendications précédentes dans laquelle l'élément d'étanchéité axialement flexible est un soufflet élastique, en particulier un soufflet métallique supplémentaire (26) qui s'appuie, d'un côté, sur l'aiguille de soupape (7) et, de l'autre côté, sur le carter (2).

15. Soupape de dosage selon la revendication 14 dans laquelle un diamètre hydraulique d2 du soufflet élastique correspond à un diamètre d1 d'une ligne d'étanchéité de la soupape à disque.

# FIG 1A

# FIG 1B

Schnitt I-I

# FIG 2A

# FIG 2B

# FIG 3

# FIG 4

## FIG 5